# EUROPEAN PATENT SPECIFICATION

(11) **EP 2 900 463 B1**
(45) Date of publication and mention of the grant of the patent: **01.03.2017**
(21) Application number: 13801785.0
(22) Date of filing: 25.09.2013
(51) Int. Cl.: B29D 30/30, B29D 30/70

(54) **METHOD OF CONTROLLING THE BUILDING OF A REINFORCING STRUCTURE FOR TYRES, PROCESS AND APPARATUS FOR PRODUCING SUCH TYRES**
VERFAHREN ZUR STEUERUNG DES HERSTELLUNGSPROZESSES VON REIFENVERSTÄRKUNGSELEMENTEN, VERFAHREN UND VORRICHTUNG ZUR HERSTELLUNG SOLCHER REIFEN
MÉTHODE POUR CONTRÔLER LA FABRICATION DE STRUCTURES DE RENFORT POUR PNEUS, PROCÉDÉ ET DISPOSITIF POUR LA FABRICATION DE CES PNEUMATIQUES

(30) Priority: 26.09.2012 IT MI20121608; 28.09.2012 US 201261707290 P
(43) Date of publication of application: 05.08.2015
(73) Proprietor: Pirelli Tyre S.p.A., 20126 Milano (IT)
(72) Inventor: BARZAGHI, Antonio Alessandro, I-20126 Milano (IT)
(74) Representative: Castiglia, Paolo
(86) International application number: PCT/IB2013/058848
(87) International publication number: WO 2014/049534

(56) References cited:
- WO-A1-2008/152453
- DE-B- 1 175 870
- US-A- 3 676 262
- US-A- 4 909 878
- US-A- 4 923 554
- US-A1- 2009 178 757

## Description

The present invention relates to a method for controlling the building of a reinforcing structure of tyres for vehicle wheels, in particular for wheels of heavy load vehicles, like trucks, articulated lorries, buses, trailers.

The invention also relates to a process and an apparatus for producing the aforementioned tyres.

The present invention, although described with particular reference to tyres for wheels of heavy load vehicles, can also be applied to the manufacturing of tyres for light load vehicle wheels, like motor vehicles or motorcycles.

A tyre for wheels of heavy or light load vehicles generally comprises a carcass structure comprising at least one carcass ply formed by reinforcing cords embedded in an elastomeric matrix. The carcass ply has end edges respectively engaged with annular anchoring structures. The latter are arranged in the areas of the tyre usually identified by the name of "beads" and each of them is normally formed of a substantially circumferential annular insert on which at least one filling insert is applied, in a radially outer position thereof. Such annular inserts are commonly identified as "bead wires" and have the task of keeping the tyre firmly fixed to the anchoring seat specifically provided in the rim of the wheel, thus preventing, in operation, the radially inner end edge of the tyre coming out from such a seat.

Specific reinforcing structures having the function of improving the torque transmission to the tyre can be provided at the beads.

A belt structure comprising one or more belt layers is associated in a radially outer position to the carcass ply, said belt layers being arranged radially one on top of the other and having textile or metal reinforcing cords with crossed orientation and/or substantially parallel to the direction of circumferential extension of the tyre.

A layer of elastomeric material, called "under-belt", can be provided between the carcass structure and the belt structure, said layer having the function of making the radially outer surface of the carcass structure as even as possible for the subsequent application of the belt structure.

A tread band, also made from elastomeric material, is applied in a radially outer position to the belt structure.

A so-called "under-layer" can be provided between the tread band and the belt structure, said sub layer being of an elastomeric material having properties suitable for allowing a steady union of the tread band to the belt structure.

Respective sidewalls of elastomeric material are also applied on the side surfaces of the carcass structure, each sidewall extending from one of the side edges of the tread band up to the respective annular anchoring structure to the beads.

In many applications, like for example in some types of tyres for heavy load vehicle wheels, between the radially innermost belt layer (hereafter also indicated as "first belt layer") and the carcass structure a zero-degrees reinforcing layer is arranged, i.e. a layer of elastomeric material provided with reinforcing elements oriented in a substantially circumferential direction, i.e. with substantially zero angle (for example lower than 10°) with respect to the equatorial plane of the tyre.

The zero-degrees reinforcing layer is made by winding in a spiral a reinforced continuous elongated element of elastomeric material on a specifically provided forming support.

The forming support is in this case provided with suitable elements or devices adapted to hold the aforementioned elongated element in position while it is wound.

The terms "radial" and "axial" and the expressions "radially inner/outer" and "axially inner/outer" are used here with reference to the radial direction and to the axial direction of a forming support used to manufacture a specific component of the tyre, like for example the carcass structure or the belt structure. The terms "circumferential" and "circumferentially", on the other hand, are used with reference to the annular extension of the aforementioned forming support.

The expression "reinforced continuous elongated element of elastomeric material" is used herein to indicate a continuous element of elastomeric material having an elongated shape, i.e. having a mainly longitudinal direction of extension, and comprising one or more thread-like reinforcing elements, such as textile or metallic cords, substantially parallel to one another.

More specifically, such thread-like reinforcing elements can be incorporated in a matrix of elastomeric material or can be coated by a layer of elastomeric material.

The expression "elastomeric material" is used herein to indicate a material whose composition comprises at least one elastomeric polymer and at least one reinforcing filler. Preferably, such a composition also comprises additives like, for example, a cross-linking and/or plasticizing agent. Thanks to the provision of the cross-linking agent, such a material can be cross-linked through heating, so as to form the final manufactured product.

The expression "attraction force" is used herein to indicate a force exerted by the forming support on the aforementioned elongated element.

The expression "tension force" is used herein to indicate a resistant force applied to the aforementioned elongated element during its winding onto the forming support in opposition to the pulling force simultaneously applied by the forming support due to its rotation.

WO 2004/045839 describes a drum for building a component of a tyre provided with metallic elements extending in the circumferential direction. The drum comprises one or more support members arranged along its circumference, each support member being provided with a support surface for the tyre component. The support members comprise magnets suitable for attracting the metallic parts of the tyre component, thus holding the latter on the support surface. The magnets are arranged under the radially outer surface of the drum.

WO 2008/152453 describes a forming drum for building a belt structure of a tyre for vehicle wheels. The forming drum has a substantially cylindrical outer deposition surface, on which a plurality of strip-like elements is applied, the strip-like elements being arranged in a close-together relationship to form at least one first annular reinforcing layer. The drum comprises a plurality of sectors and is initially set at a first working diameter. Adjustment devices operate on the forming drum for expanding it, after the deposition of the plurality of the strip-like elements, up to a second working diameter that is greater than the first working diameter. The expansion takes place while the outer deposition surface keeps the substantially cylindrical shape. The sectors of the forming drum have a plurality of magnets associated therewith, the magnets being suitable for interacting with the metallic material constituting the reinforcing cords integrated in the strip-like elements, so as to ensure the stable positioning of the strip-like elements also in the presence of inner tensions. The forming drum is finally contracted radially until a diameter smaller than the first diameter is reached, so as to allow the axial removal of the reinforcing structure which has been built thereon.

The Applicant has observed that the use of forming supports provided with discrete magnets, like for example the drums illustrated above, although on the one hand allows a reinforcing structure (for example a belt structure) comprising a zero-degrees reinforcing layer (in turn comprising metallic thread-like elements or cords) to be made in a radially inner position with respect to a first reinforcing layer (for example a first belt layer), on the other hand it has some drawbacks.

According to the Applicant, a specifically critical aspect is linked to the fact that making the coiled winding of the reinforced continuous elongated element of elastomeric material requires an effective holding on the forming support at least of the head and tail portions of the aforementioned elongated element. Therefore, it is necessary for the forming support to comprise respective magnets at least at the attachment areas of the aforementioned head and tail portions.

The Applicant has, however, verified that the presence of more than one magnet along the axial direction of the forming support can compromise the regularity of deposition of the coiled winding. The Applicant has, indeed, observed that, due to the attraction force exerted on each coil of the aforementioned winding by the axially adjacent magnet(s), an axial displacement of some coils of the winding can occur, such a displacement being of variable extent depending on the distance between coil and axially adjacent magnet(s). In this case a coiled winding with irregular spacing between the various coils and, consequently, a zero-degrees reinforcing layer of unsatisfactory quality, is obtained.

The Applicant has found that the problem discussed above is exasperated where it is wished to produce tyres of different size without having to change equipment each time (for example without having to change the forming support of the reinforcing structure). In this case, it is indeed necessary to provide for a sufficiently large number of magnets aligned along the axial direction on the forming support.

The Applicant has indeed observed that a variation in size of the tyre to be produced involves a variation of the axial length of the reinforcing structure (for example of the belt structure) and, therefore, a variation of the axial length of the zero-degrees reinforcing layer, i.e. a variation of the axial distance between the head portion and the tail portion of the coiled winding. Hence the need to provide for multiple magnets in the axial direction on the forming support, so as to cover all of the different attachment positions of the head and tail portions of the coiled winding as the size of the tyre to be produced varies.

The Applicant has also found that the use of a large number of discrete magnets arranged side-by-side along the axial direction produces, in addition to the aforementioned irregularity of deposition of the various coils of the winding, a high radial attraction force on the coils themselves. Such an attraction force could cause an undesired structural detachment between the zero-degrees reinforcing layer and the first reinforcing layer (for example the first belt layer) due to the radial contraction of the forming support in order to remove the reinforcing structure (for example of the belt structure) which has been built thereon.

The Applicant has indeed observed that the zero-degrees reinforcing layer and the first reinforcing layer (for example the first belt layer) are associated with each other due to a mutual coupling force generated exclusively by the stickiness of the respective elastomeric materials and that such a coupling force may not be sufficient to hold the two components firmly coupled to one another when one of the two components is subjected to a decoupling force (like for example the attraction force towards the forming support during the radial contraction thereof) of a greater extent.

The Applicant has also observed that the risk of the aforementioned structural detachment to occur is accentuated if the reinforced continuous elongated element of elastomeric material is wound on the forming support with a predetermined tension force. In this case, indeed, after the forming support is radially contracted for removing the reinforcing structure (for example of the belt structure) which has been built thereon, the tension force adds to the attraction force, basically producing on the radially inner surface of the zero-degrees reinforcing layer a radial contraction force of a greater extent than the aforementioned coupling force.

The Applicant has perceived that by suitably controlling the various forces in play during the manufacturing of the reinforcing structure it is possible to satisfy the at least partially contrasting requirements discussed above, i.e. obtaining a firm anchoring of the head and tail portions of the coiled winding on the forming support and a high regularity of deposition of the coils of the aforementioned winding, at the same time avoiding a structural detachment between zero-degrees reinforcing layer and first reinforcing layer (for example first belt layer) when the reinforcing structure (for example of the belt structure) is removed from the forming support.

In particular, the Applicant has realised that by suitably controlling the attraction force acting on the reinforced continuous elongated element of elastomeric material during its winding on the forming support, it is possible to obtain the desired firm anchoring of the head and tail portions of the coiled winding and the desired regularity of deposition of the coils of the aforementioned winding on the forming drum. The Applicant has also realised that by suitably controlling at least one of the aforementioned attraction force and tension force, it is possible to avoid the detachment of the zero-degrees reinforcing layer from the first reinforcing layer (for example from the first belt layer) when the reinforcing structure (for example of the belt structure) is removed from the forming support.

Specifically, the Applicant has verified that it is possible to adequately control the aforementioned attraction force by suitably adjusting possible devices properly provided at the forming support for generating the aforementioned attraction force (like for example suction or vacuum-generating devices, in the particular case in which the reinforcing cords of the reinforced continuous elongated element are textile) or, alternatively, by suitably designing possible magnets properly associated with the forming support (in the particular case in which the reinforcing cords of the reinforced continuous elongated element are metallic).

The Applicant believes that it is also possible to avoid the decoupling of the zero-degrees reinforcing layer from the first reinforcing layer (for example from the first belt layer) when the reinforcing structure (for example of the belt structure) is removed from the forming support by limiting as much as possible the size of the tension force and/or keeping the aforementioned attraction force at the minimum value necessary to achieve the desired firm anchoring of the head and tail portions of the coiled winding and the desired regularity of deposition of the coils of the zero-degrees reinforcing layer on the forming drum.

More generally, the Applicant has found that, once it has been established which element or device will be used to generate the attraction force on the reinforced continuous elongated element of elastomeric material, it is possible to make, on the forming support, a reinforcing structure (for example a belt structure) comprising a zero-degrees reinforcing layer in which the coils are regularly distributed and in which the first reinforcing layer (for example the first belt layer) remains firmly anchored to the zero-degrees reinforcing layer, even after the forming support is radially contracted for removing the reinforcing structure which has been built thereon, by controlling at least one of the attraction force and the tension force so that the sum of the attraction force and of the tension force is lower than the coupling force between the zero-degrees reinforcing layer and the first reinforcing layer.

The present invention relates, in a first aspect thereof, to a method for controlling the building of a reinforcing structure of tyres for vehicle wheels, as defined in claim 1.

Preferred embodiments of this method are defined in the dependent claims 2 to 8.

The Applicant believes that the method of the present invention allows a reinforcing structure (for example a belt structure) to be made in which the coils of the aforementioned coiled winding are regularly distributed on the forming support and in which the reinforcing layer (for example the belt layer) associated in a radially outer position with respect to the aforementioned coiled winding is firmly anchored to the coiled winding and remains firmly anchored thereto even after the forming support is radially contracted for removing the reinforcing structure which has been built thereon. Indeed, in accordance with the present invention, the forces acting on the reinforced continuous elongated element are on the one hand such as to ensure, during the winding on the forming support, a stable and regular positioning of the various coils of the coiled winding on the forming support and on the other hand such as to generate, when the reinforcing structure (for example of the belt structure) is removed from the forming support, an overall radial contraction force whose extent is smaller than the coupling force acting between the coiled winding and the radially juxtaposed reinforcing layer (for example the belt layer).

In a second aspect thereof, the present invention relates to a process for producing tyres for vehicle wheels, comprising building a reinforcing structure on a forming support, as defined in claim 9.

In a third aspect thereof, the present invention relates to an apparatus for producing a tyre for vehicle wheels, as defined in claim 10, the apparatus comprising a building station of a reinforcing structure.

Preferred embodiments of this apparatus are defined in the dependent claims 11 to 15.

Such an apparatus advantageously allows the method and the process described above to be carried out.

The present invention, in at least one of the aforementioned aspects, can have at least one of the following preferred characteristics.

Preferably, said control is carried out on said tension force.

Preferably, said control comprises detecting a current tension value acting on said at least one reinforced continuous elongated element of elastomeric material during its deposition and adjusting said tension force so that said current tension value is lower than a predetermined threshold value. Thus a continuous monitoring, or a monitoring with a certain frequency, of the tension which the reinforced continuous elongated element is subjected to during its winding on the forming support is carried out, with the purpose of keeping such a tension on minimum values, i.e. values as close as possible to zero, so as to minimise the overall radial contraction force acting on the coiled winding when the forming support is radially contracted for removing the reinforcing structure.

Preferably, before depositing said at least one reinforcing layer said attraction force is exerted on at least one tail portion of said at least one reinforced continuous elongated element of elastomeric material. Such a provision contributes to obtaining a stable positioning of the coiled winding on the forming support, to the benefit of the regularity of the subsequent deposition of the reinforcing layer in a radially outer position with respect to the coiled winding.

Preferably, said at least one reinforced continuous elongated element of elastomeric material comprises at least one metallic cord and said attraction force is a magnetic force. However, alternative embodiments are foreseen in which the reinforced continuous elongated element of elastomeric material comprises at least one textile cord and said attraction force is a suction force created by a suitable suction or vacuum-generating device.

Preferably, said magnetic force is generated by at least one first magnetic sheet associated with said forming support at a radially outer surface portion thereof.

The expression "magnetic sheet" is used herein to indicate a magnetic element having a negligible thickness (or height) with respect to its surface dimensions (length and width). The length of the magnetic sheet corresponds to its size in the circumferential direction of the forming support, when the magnetic sheet is associated with the forming support. The width of the magnetic sheet corresponds to its size in the axial direction of the forming support, when the magnetic sheet is associated with the forming support.

The Applicant has verified that the use of a magnetic sheet is extremely advantageous for a number of reasons.

Firstly, thanks to its low thickness the magnetic sheet can match perfectly the profile of the forming support, both in the axial direction and in the circumferential direction, also in cases in which the forming support has a certain curvature in the axial direction. Consequently, it is ensured that an uniform support surface is obtained, with no steps or discontinuity. The magnetic force generated by the magnetic sheet is in this case uniformly distributed both in the axial direction and in the circumferential direction. This makes it possible to have the same magnetic force in every point of the magnetic sheet. After all, the desired regularity of distribution of the coils of the coiled winding in the axial direction is obtained.

Moreover, thanks to the fact that the magnetic force exerted by the magnetic sheet is distributed over a much larger surface than in the solutions in which discrete magnets are used, comparatively low attraction force values per unit surface are obtained. This contributes to reducing the risk of causing a structural detachment of the coiled winding from the radially overlapped reinforcing layer due to the radial contraction of the forming support in order to remove the reinforcing structure which has been built thereon.

The Applicant has verified that by making a careful choice of the surface dimensions of the magnetic sheet it is possible to ensure that the magnetic force generated is sufficient to cause the attraction of the reinforced continuous elongated element towards the forming support (and therefore the stable and regular positioning of the coiled winding on the forming support), at the same time avoiding such an attraction force causing, in synergy with the aforementioned tension force, the aforementioned structural detachment.

Preferably, the dimensions of the magnetic sheet are selected so as to cover all of the different attachment positions of the head and tail portions of the coiled winding as the size of the tyre to be produced varies.

Preferably, said magnetic force is also generated by a plurality of second magnetic sheets associated with said forming support. The use of the second magnetic sheets allows improving the attraction and the holding in position of the reinforced continuous elongated element on the forming support. They also contribute to keeping the desired regularity of deposition of the coils of the coiled winding also in the case of manipulation of the radially overlapped reinforcing layer. Such manipulation may for example be necessary to make a manual joint in the aforementioned reinforcing layer.

Preferably, said second magnetic sheets each have a circumferential length that is shorter than the circumferential length of said at least one first magnetic sheet. The size of such second magnetic sheets is such as to cause a controlled increase of the attraction force towards the forming support, so as to contribute obtaining a stable and regular positioning of the coiled winding on the forming support without, however, causing he aforementioned structural detachment when the reinforcing structure is removed from the forming support.

Preferably, said at least one reinforcing layer is pressed on said coiled winding at least at said at least one first magnetic sheet. Such a provision makes it possible to consolidate the coiled winding with the radially overlapped reinforcing layer, contributing to avoid the risk of the aforementioned structural detachment occurring.

Preferably, said tension force is lower than about 5 N. Advantageously, the tension force is adjusted and kept to minimum values, once again to avoid the aforementioned structural detachment.

Preferably, said at least one reinforcing layer comprises, at a radially inner surface thereof, a sheet of elastomeric material. Such a sheet of elastomeric material contributes to further consolidate the coupling between coiled winding and radially overlapped reinforcing layer.

Said sheet of elastomeric material can be associated with said radially inner surface of said at least one reinforcing layer.

In a different embodiment, said sheet of elastomeric material can be incorporated in said at least one reinforcing layer close to said radially inner surface. In any case, it is associated with the reinforcing layer when the latter is made, without therefore altering in any way the cycle time of the process of the invention.

Preferably, said at least one reinforcing layer comprises at least one belt layer and said reinforcing structure is a belt structure. The forming support discussed above in this case is the auxiliary forming support used to manufacture the crown structure of the tyre, such a crown structure comprising the belt structure and possibly, in a radially outer position with respect to the belt structure, the tread band.

Preferably, said adjustment device acts on the deposition device of said at least one reinforced continuous elongated element of elastomeric material to adjust said tension force.

Even more preferably, said adjustment device comprises a detection unit of a current tension value acting on said at least one reinforced continuous elongated element of elastomeric material during its deposition.

In a further embodiment, said adjustment device comprises an adjustment unit of said tension force as a function of said current tension value.

Preferably, at least one first magnetic sheet is associated with said at least one attachment area.

Said at least one first magnetic sheet can be glued onto said at least one attachment area.

In a further embodiment, said at least one first magnetic sheet can be glued to an insert which can be mounted in said at least one attachment area.

Preferably, said at least one first magnetic sheet is sized as a function of the axial distance between said head portion and said tail portion of said at least one reinforced continuous elongated element of elastomeric material when the latter is wound on said forming support.

More preferably, said at least one first magnetic sheet has an axial length at least equal to the maximum axial distance between said head portion and said tail portion. In this way, it is possible to use a single magnetic sheet to exert the desired attraction force both on the head portion and on the tail portion of the coiled winding.

Even more preferably, said axial length is greater than said maximum axial distance by no more than 20%.

Preferably, said at least one first magnetic sheet is sized as a function of the circumferential distance between a head free end face and a tail free end face of said at least one reinforced continuous elongated element of elastomeric material when the latter is wound on said forming support.

More preferably, said at least one first magnetic sheet has a circumferential length at least equal to the minimum circumferential distance between said head free end face and said tail free end face.

More preferably, the head portion and the tail portion of the coiled winding have a circumferential overlap, so as to be able to use a single magnetic sheet to exert the desired attraction force both on the head portion and on the tail portion of the coiled winding.

Even more preferably, said circumferential length is greater than said minimum circumferential distance by at least 100%.

In general, the Applicant has found that by using a magnetic sheet having the dimensions discussed above it is possible to generate an attraction force of an extent such as to achieve a good compromise between attraction of the reinforced continuous elongated element towards the forming support, reduction of the overall radial contraction force acting on the coiled winding when the reinforcing structure is removed from the forming support and coverage of all of the different attachment positions of the head and tail portions of the coiled winding as the size of the tyre to be produced varies.

Preferably, said at least one first magnetic sheet has a thickness lower than about 1.5 mm.

Preferably, said radially outer surface portion of said forming support has a surface roughness greater than that of the remaining outer surface portion of said forming support. Such a provision makes it easier to keep the various coils of the coiled winding in position, in this way contributing to achieving the desired regularity of deposition of the coils, also in the case of manipulation of the radially overlapped reinforcing layer.

Preferably, said surface roughness is defined by a knurling.

Preferably, said knurling comprises a plurality of circumferentially-oriented grooves. In this way, undesired axial movements of the aforementioned coils are stopped.

In preferred embodiments of the present invention, a plurality of second magnetic sheets are associated with said forming support.

Preferably, said second magnetic sheets each have a circumferential length shorter than the circumferential length of said at least one first magnetic sheet.

Preferably, said second magnetic sheets are circumferentially distributed on said forming support at said radially outer surface portion with a predetermined pitch. The attraction force exerted by the aforementioned second magnetic sheets is therefore evenly distributed in the circumferential direction, with clear advantages in terms of regularity of deposition and stability of the positioning of the coils of the coiled winding.

Preferably, said deposition device of said at least one reinforced continuous elongated element of elastomeric material comprises at least one feeding member of said at least one reinforced continuous elongated element of elastomeric material towards said forming support and at least one transferring member of said at least one reinforced continuous elongated element of elastomeric material on said forming support.

Preferably, said at least one transferring member comprises at least one magnetic roll. Such a magnetic roll keeps the reinforced continuous elongated element in a desired position with respect to the forming support before the reinforced continuous elongated element is attracted by the forming support due to the attraction action exerted by the magnetic sheet(s).

Preferably, said at least one magnetic roll has a coating of soft material. In this way, the reinforced continuous elongated element is not subjected to undesired stress when it is carried by the magnetic roll on the forming support.

Preferably, said building station comprises at least one pressing member active on said forming support.

Preferably, said at least one pressing member comprises a respective roll.

Preferably, said forming support has a predetermined curvature in the axial direction. In this way the reinforcing structure which has been built thereon can take on a shape as close as possible to that the one taken in the finished tyre.

Preferably, said forming support comprises a plurality of sectors that are circumferentially adjacent and radially moveable. The possibility of radial movement of the aforementioned sectors makes it possible, on the one hand, building reinforcing structures of different radial dimensions intended for tyres of different radial dimensions and, on the other hand, easily removing the reinforcing structure manufactured each time from the forming support.

Preferably, said at least one attachment area is defined in one of said sectors. In this way, the relative movement between the various sectors due to the radial expansion/contraction of the forming support does not produce any undesired stress on the magnetic sheet.

Preferably, two first magnetic sheets are associated with respective attachment areas arranged on axially opposite sides with respect to a plane of transversal symmetry of said forming support. It is thus possible to make two distinct reinforcing structures on a single forming support, each reinforcing structure extending at a respective side of the tyre with respect to the equatorial plane thereof. It is also possible to alternatively make a single reinforcing structure that extends axially from one side of the tyre to the other, crossing the aforementioned equatorial plane.

Further characteristics and advantages of the present invention will become clearer from the following detailed description of preferred embodiments thereof, made with reference to the attached drawings. In such drawings:
- figure 1 is a schematic side and partial view of a portion of an apparatus for manufacturing a tyre in accordance with the present invention, in an operative configuration thereof;
- figure 2 is a schematic view from above of the portion of apparatus of figure 1 in a non-operative configuration;
- figure 3 is a schematic view that shows the plan extension of a forming support used in the apparatus of figure 1;
- figure 4 is a schematic perspective view of the forming support of figure 3 in an operative configuration thereof;
- figure 5 is a schematic perspective view of the forming support of figure 3 in a different operative configuration;
- figure 6 is a schematic perspective view of a first embodiment of a constructive element of the forming support of figure 3;
- figure 7 shows a section taken along the section line A-A, of the constructive element of figure 6;
- figure 8 is a schematic plan view of a second embodiment of a constructive element of the forming support of figure 3, in an operative configuration;
- figures 9 and 10 schematically show a longitudinal (or axial) section of two different types of tyres that can be obtained with the apparatus of figure 1.

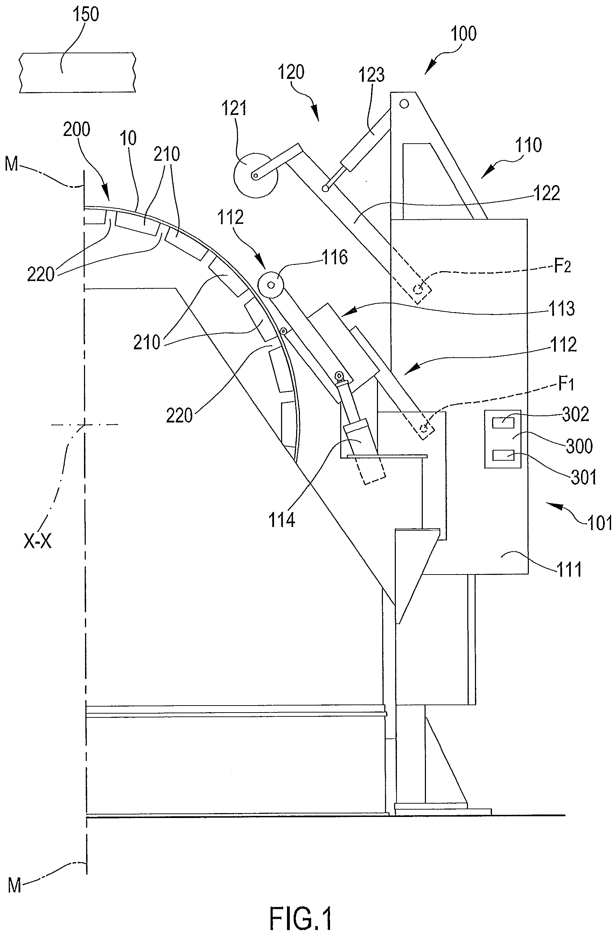

In figure 1, a portion of an exemplary embodiment of an apparatus for producing tyres for vehicle wheels in accordance with the present invention is globally indicated with reference numeral 100.

Preferably, the apparatus 100 can be used in a process for producing tyres for wheels of heavy load vehicles, like trucks, articulated lorries, buses, trailers. However, it is also foreseen using such an apparatus in processes for producing tyres for light load vehicle wheels, like motor vehicles or motorcycle.

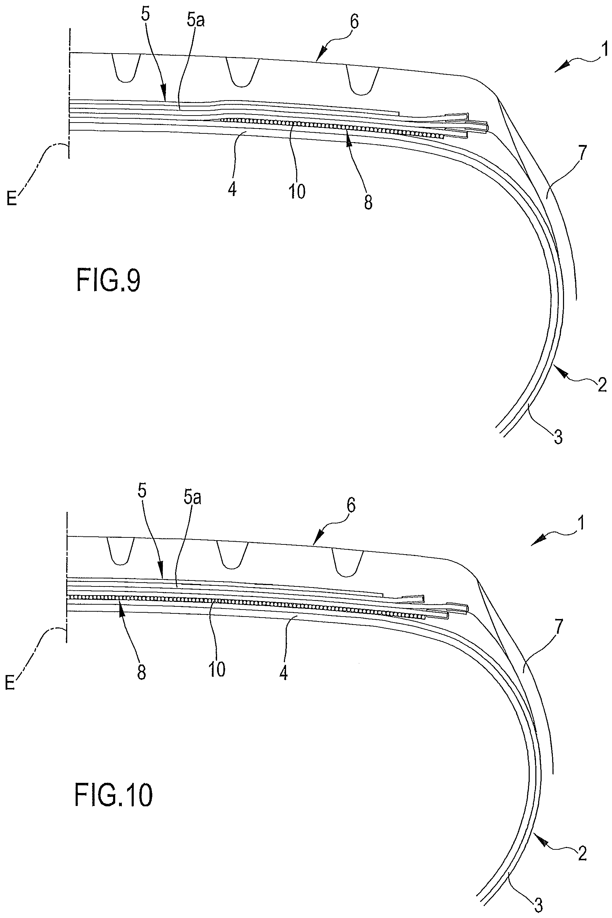

An example of a tyre that can be manufactured with the apparatus 100 is shown in figure 9. Such a tyre, indicated with 1, essentially comprises a carcass structure 2 comprising at least one carcass ply 3 whose end axial edges (not shown) are engaged with respective annular anchoring structures (not shown) specifically provided at the beads of the tyre to allow the stable coupling of the tyre 1 with the respective mounting rim.

A layer of impermeable elastomeric material or so-called liner 4 is applied in a radially inner position with respect to the carcass ply 3.

A reinforcing structure, preferably a belt structure 5, is arranged in a radially outer position with respect to the carcass structure 2. A tread band 6 is arranged in a radially outer position with respect to the belt structure 5, to form with said belt structure a crown structure of the tyre.

Between the carcass structure 2 and the belt structure 5 a "under-belt" layer, not shown, can be provided. Between the tread band 6 and the belt structure 5 a "under-layer", also not shown, can be arranged.

On the side surfaces of the carcass structure 2 respective sidewalls 7 of elastomeric material are also applied, each extending from one of the side edges of the tread band 6 up to the respective annular anchoring structure.

The belt structure 5 comprises a plurality of reinforcing layers, preferably belt layers 5a, arranged radially overlapped to one another and having textile or metallic reinforcing cords with crossed orientation and/or substantially parallel to the direction of circumferential extension of the tyre 1.

The belt structure 5 comprises, in a radially inner position with respect to the radially innermost belt layer 5a, and at least at its opposite axial end portions, a zero-degrees reinforcing layer 8. Such a reinforcing layer 8 is defined by a respective coiled winding of a respective reinforced continuous elongated element 10 of elastomeric material.

The reinforced continuous elongated element 10 incorporates a plurality of thread-like reinforcing elements (not visible), in particular metallic cords, preferably made from steel, more preferably high-elongation steel. Such metallic cords are oriented according to a substantially circumferential direction and parallel to one another, thus forming a substantially zero angle (for example an angle of between about 0° and about 10°) with respect to an equatorial plane E of the tyre 1. The number of reinforcing cords varies according to the width of the reinforced continuous elongated element 10 and/or the zero-degrees reinforcing layer 8. Preferably, the number of reinforcing cords is between two and four, more preferably equal to three.

Between the zero-degrees reinforcing layer 8 and the assembly of belt layers 5a a mutual coupling force acts that is generated by the stickiness of the respective elastomeric materials.

In preferred embodiments of the present invention, the radially innermost belt layer 5a comprises, at the radially inner surface thereof, a sheet of elastomeric material (not visible). Such a sheet of elastomeric material is thus radially arranged, in the manufactured tyre, between the aforementioned radially innermost belt layer 5a and the zero-degrees reinforcing layer 8.

The aforementioned sheet of elastomeric material can be glued to the radially innermost surface of the radially innermost belt layer 5a or, alternatively, it can be incorporated in said belt layer 5a close to the radially inner surface thereof.

Figure 10 shows an alternative embodiment of a tyre that can be manufactured with the apparatus 100. Such an embodiment differs from the example of figure 9 only in that the zero-degrees reinforcing layer 8 axially extends for substantially the entire axial extension of the belt structure 5.

With reference to figure 1, the apparatus 100 comprises a building station 101 of a reinforcing structure of the tyre, which in the specific case herein shown and described is the belt structure 5 or, possibly, the crown structure described above.

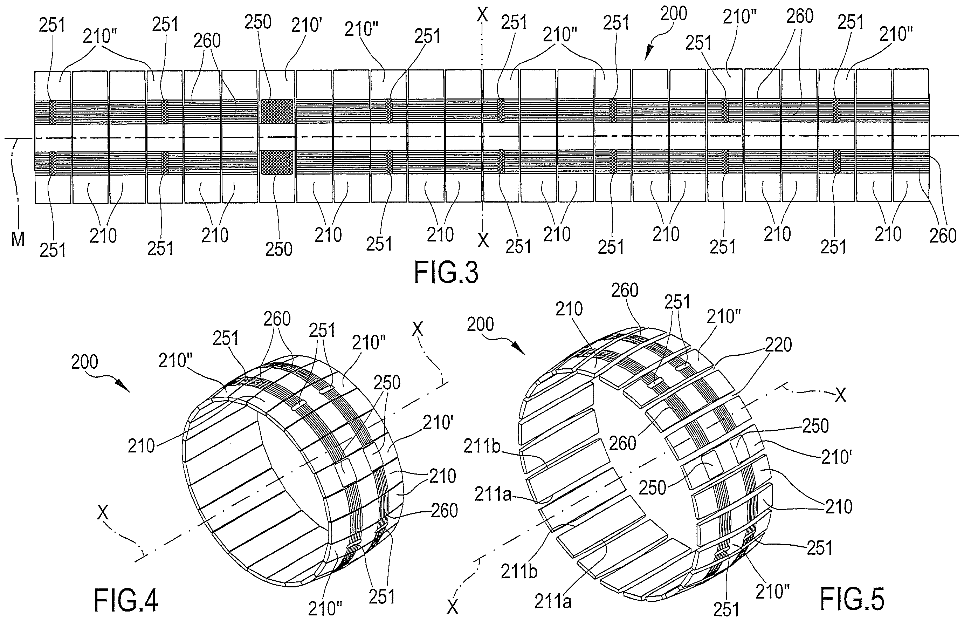

The building station 101 of the apparatus 100 comprises a forming support 200, shown in greater detail in figures 3-5. Such a forming support 200, in the specific case herein shown and described, is the auxiliary forming support (or second-stage building drum) used for building the belt structure 5, or possibly the crown structure, in a process for producing the tyre of the so-called "two-stage" type.

Nevertheless, it is also foreseen to use the apparatus 100 for manufacturing a carcass structure of a tyre. In this case, the forming support is the building drum of a first stage used for manufacturing the carcass structure of the tyre in a process for producing the tyre of the so-called "two-stage" type or, alternatively, the building drum of the so-called "unistage" type used in a process for producing the tyre in a single stage.

With reference to figure 1, the forming support 200 can rotate about a rotation axis X-X and comprises a plurality of sectors 210 provided with a predetermined curvature in the circumferential direction. Some of the aforementioned sectors 210 are indicated in figures 3-8 with reference numerals 210' and in figures 3-5 with reference numerals 210", for the reasons described later on.

Throughout the present description and in the following claims, when it will not be necessary to discriminate sectors 210' and/or 210" from the other sectors 210 reference numeral 210 will be used for all of them. Only for the sake of clarity of illustration, in the figures attached hereto the reference numeral 210 is associated with just some of the aforementioned sectors.

Sectors 210 are arranged side-by-side in the circumferential direction to form the forming support 200 and they can be moved radially simultaneously through suitable devices that are not shown. Such devices can for example be those described in patent application WO 2008/152453 to the same Applicant.

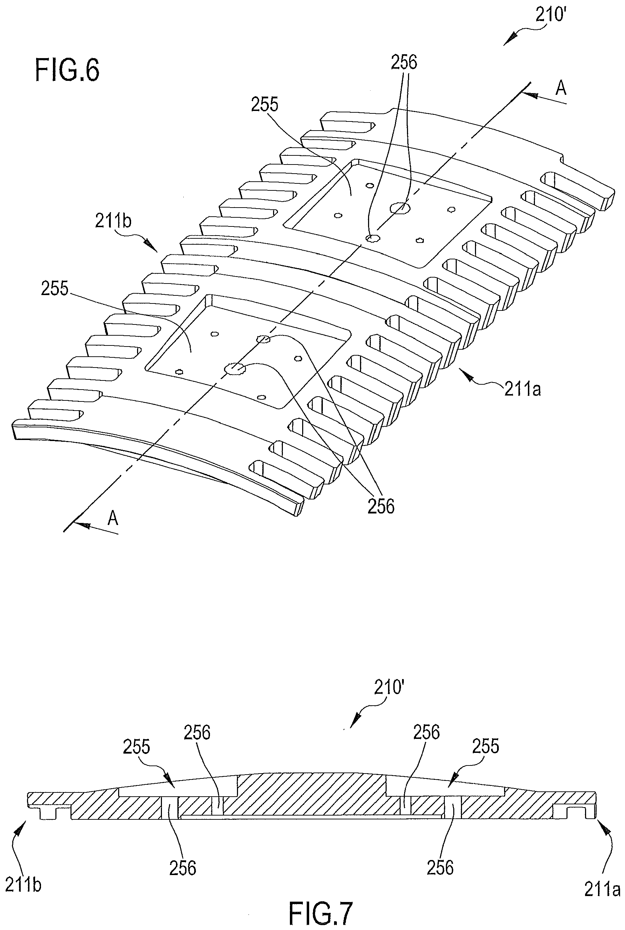

Due to the radial movement of the sectors 210, the forming support 200 can take up a contracted operative configuration, schematically shown in figure 4, in which the various sectors 210 are close to one another in the circumferential direction and, preferably, in a mutual contact condition, and an expanded operative configuration, schematically shown in figure 5, in which the various sectors 210 are spaced apart from one another in the circumferential direction.
sectors 210 have an elongated shape in the axial direction and they can comprise substantially rectilinear sidewalls, as in the example shown in detail in figures 3-5 and 8, or comb-like sidewalls, as in the example shown in detail in figures 6 and 7.

In both cases, sectors 210 can be substantially flat along the axial direction or preferably, as shown in figures 4-7, they can have a predetermined curvature along the axial direction. In any case, the shape of the sectors 210 is such as to provide the forming support 200 with a substantially cylindrical shape.

In the case of use of sectors 210 with substantially rectilinear sidewalls, an empty space 220 is defined between each pair of adjacent sectors 210 in the expanded configuration of the forming support 200. Only for the sake of clarity of illustration, in figures 1 and 5 reference numeral 220 is associated with just some of the aforementioned empty spaces.

On the other hand, in the case of use of sectors 210 with comb-like sidewalls, the adjacent combs of two circumferentially adjacent sectors 210 preferably remain at least partially interconnected in the expanded configuration of the forming support 200, so as to define in the forming support 200 at least one circumferential portion without empty spaces.

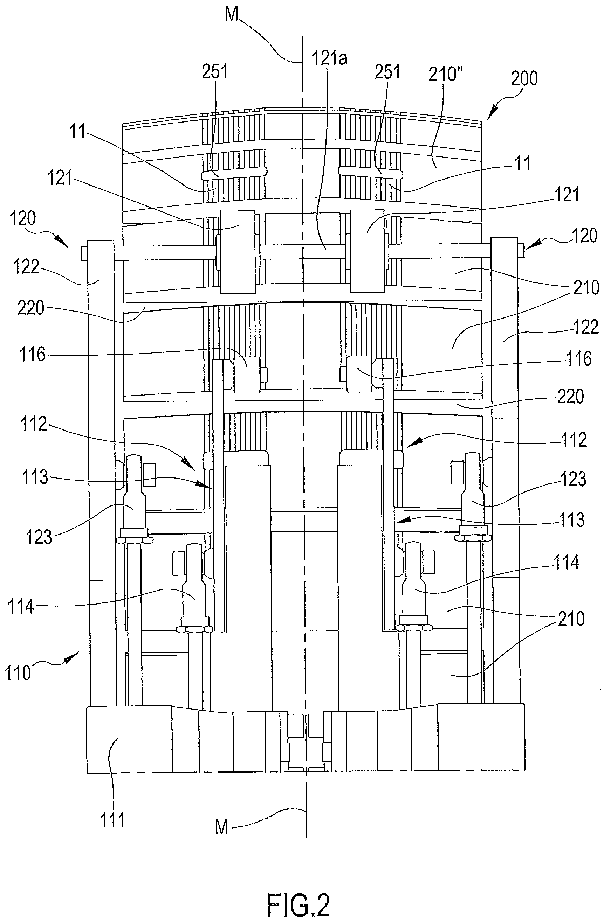

With particular reference to figures 1 and 2, the building station 101 also comprises a device 110 provided for depositing, on the forming support 200, the reinforced continuous elongated element 10 described above.

Device 110 comprises a frame 111 on which a pair of feeding members 112 of a respective reinforced continuous elongated element 10 are mounted. The feeding members 112 (only one of which is visible in figure 1) are arranged on opposite sides with respect to the plane of transversal symmetry M of the forming support 200, as shown in figure 2.

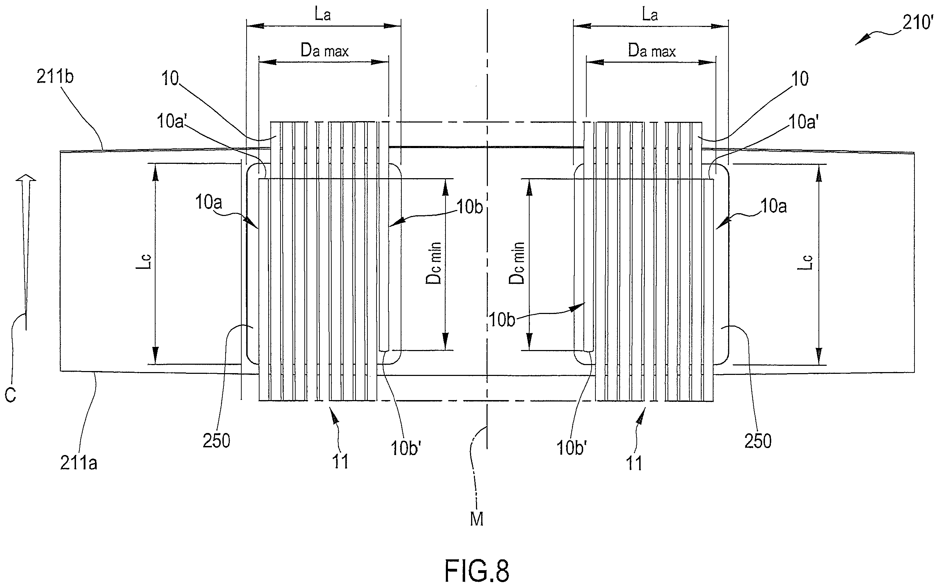

In the embodiment illustrated herein, each feeding member 112 comprises an arm 113 intended to allow the deposition, on the forming support 200, of a respective reinforced continuous elongated element 10 to form a respective coiled winding 11 (in turn intended to define a zero-degrees reinforcing layer 8 of the tyre being processed). Such a coiled winding 11 is visible in figure 8, where for the sake of simplicity of illustration just one sector 210 of the forming support 200 is shown, the other sectors 210 (not shown) being distributed along the circumferential direction indicated by the arrow C.

The deposition of the reinforced continuous elongated element 10 on the forming support 200 takes place when the latter is in its expanded operative configuration.

With reference to figures 1 and 2, a respective member (not visible in the figures attached hereto) is fixedly associated with each arm 113, said member being suitable for guiding the reinforced continuous elongated element 10 towards the forming support 200.

At a free end of each arm 113 proximal to the forming support 200 a respective transferring member of the reinforced continuous elongated element 10 on the forming support 200 is associated.

In the embodiment illustrated herein, said transferring member is defined by a magnetic roll 116.

Preferably, the magnetic roll 116 has, on the outer surface thereof, a coating of soft material, like for example neoprene.

Again with reference to figures 1 and 2, the position of each arm 113 with respect to the frame 111 and, consequently, with respect to the forming support 200, can be adjusted. In particular, each arm 113 is pivoted to the frame 111 at a pivoting axis F₁ (figure 1), so as to be able to be moved towards, and away from, the forming support 200. Such movement is controlled by a respective actuator 114 which, preferably, is of the pneumatic type.

A cutting member (not shown) is specifically provided on the frame 111 at each feeding member 112, upstream of the roll 116 and downstream of the arm 113, to shear the reinforced continuous elongated element 10 at a predetermined section.

The section at which the reinforced continuous elongated element 10 is sheared is selected as a function of the longitudinal size of the length of reinforced continuous elongated element 10 that is wished to be deposited, such a size being a function of the axial size of the coiled winding 11 that is intended to be made and of the circumferential overlap that it is wished to obtain between the head portion 10a and the tail portion 10b (figure 8) of the aforementioned length of reinforced continuous elongated element 10.

In particular, with reference to figure 8, the longitudinal size of the length of reinforced continuous elongated element 10 that it is wished to deposit is such that the coiled winding 11 formed thereby has a desired axial size and the head portion 10a and the tail portion 10b of such a coiled winding 11 have a circumferential overlap having a size, indicated in figure 8 with Dcmin, equal to the minimum circumferential distance between the head free end face 10a' and the tail free end face 10b' of the aforementioned reinforced continuous elongated element 10.

On the frame 111 it is also mounted a pressing member 120 suitable for pressing, as better illustrated in a preferred embodiment described hereafter, the reinforcing structure 5 acting on the radially outermost belt layer 5a.

In the embodiment illustrated herein, the pressing member 120 comprises a pair of rolls 121, preferably of the brush type, mounted on an axis 121a (figure 2) which is fixedly associated with opposite support brackets 122 (figures 1 and 2). Each support bracket 122 is pivoted, at a pivoting axis F₂ (figure 1), to the frame 111. The position of the support bracket 122 with respect to the frame 111, and therefore with respect to the forming support 200, can be changed due to the thrusting action exerted on the support bracket 122 by an actuator 123 which, preferably, is of the pneumatic type.

With reference to figures 3-5 and 8, at least one sector 210 of the forming support 200 (preferably just one sector 210, identified in the drawings with reference numeral 210') has, on respective portions of the radially outer surface thereof, a pair of magnetic sheets 250. The two magnetic sheets 250 are arranged at respective radially outer surface portions of the sector 210' on opposite sides with respect to the plane of transversal symmetry M (or middle plane) of the forming support 200. Such surface portions define respective attachment areas of the head portion 10a and of the tail portion 10b of the coiled winding 11 on the forming support (figure 8). The attachment of the aforementioned head and tail portions 10a, 10b on the forming support 200 takes place due to the magnetic attraction force exerted by the magnetic sheets 250 on the metallic cords of the reinforced continuous elongated element 10 that defines the coiled winding 11.

With reference to figure 8, the dimensions of the magnetic sheets 250 are preferably selected so as to cover all of the different attachment positions of the head portions 10a and of the tail portions 10b of the coiled winding 11 as the size of the tyres to be produced varies. The sizing of the magnetic sheets 250 is also made as a function of the circumferential distance between the free end face 10a' of the head portion 10a and the free end face 10b' of the tail portion 10b of the coiled winding 11.

In particular, in the specific example shown in figure 8, each of the magnetic sheets 250 has an axial length La at least equal to (preferably greater than by no more than 20%) the maximum axial distance Damax between the head portion 10a and the tail portion 10b of the respective coiled winding 11, and a circumferential length Lc at least equal to (preferably at least 100% greater than) the minimum circumferential distance Dcmin between the head portion 10a and the tail portion 10b of the respective coiled winding 11.

Preferably, each of the magnetic sheets 250 has a circumferential length equal to about 100 mm and an axial length equal to about 90 mm.

Preferably, each of the magnetic sheets 250 has a thickness lower than about 1.5 mm.

Further magnetic sheets 251 are associated with some of the sectors 210 (distinct from the sector 210' and identified with reference numeral 210") of the forming support 200. The magnetic sheets 251 differ from the magnetic sheets 250 only in that they have, in the circumferential direction, a size smaller than that of the magnetic sheets 250. For example, the circumferential length of the magnetic sheets 251 is equal to or lower than 30% of the circumferential length of the magnetic sheets 250.

Similarly to the magnetic sheets 250, the magnetic sheets 251 are arranged coupled in pairs on each sector 210", with the two magnetic sheets 251 of each pair arranged symmetrically on opposite sides with respect to the plane of transversal symmetry M of the forming support 200, substantially circumferentially aligned with the magnetic sheets 250.

The remaining sectors 210 of the forming support 200 do not have any magnetic sheet.

The magnetic sheets 250, 251 can be glued onto the radially outer surfaces of the sectors 210', 210" or alternatively, they can be glued to respective inserts (not illustrated) capable to be mounted in suitable seats formed on the radially outer surfaces of the sectors 210', 210". As an example, figures 6 and 7 show an angular sector 210' provided with seats 255 for housing the aforementioned inserts. The seats 255 are in this case provided with holes (all indicated with 256) for mounting the aforementioned inserts.

With particular reference to figure 3, sectors 210, 210' and 210" are arranged one after the other in the circumferential direction with a predetermined sequence. In particular, starting from sector 210' carrying the magnetic sheets 250 thereon, sectors 210" carrying the magnetic sheets 251 thereon follow one after the other in the circumferential direction with a predetermined pitch equal to the circumferential distance occupied by many sectors 210 without magnetic sheets. More specifically, in the specific example shown in figure 3, indicating sectors 210 without magnetic sheets with V, sectors 210' provided with magnetic sheets 250 with ML and sectors 210" provided with magnetic sheets 251 with MC, the sequence of the sectors, starting from a sector 210' provided with magnetic sheets 250 is as follows: ML V V MC V V MC V V MC V V MC V V MC V V MC V V.

With particular reference to figures 3-5, the radially outer surface portion of sectors 210 at which the coiled winding 11 is intended to be deposited has a greater surface roughness than that of the remaining outer surface portion of such sectors 210. Preferably, said surface roughness is defined by a knurling 260 in turn defined by a plurality of preferably circumferentially oriented grooves. Just for the sake of clarity of illustration, in the figures attached hereto reference numeral 260 is indicated at just some of the aforementioned sectors 210 and the axial distance between the grooves of the knurling 260 is deliberately increased.

The building station 101 also comprises a deposition device 150 of the belt layers 5a in a radially outer position with respect to the zero-degrees reinforcing layer 8, so as to complete the building of the belt structure 5. Such a deposition device 150 is only schematically shown in figure 1 and, for the purposes of the present invention, it does not need to be further described and illustrated.

The building station 101 can also comprise a device (not illustrated) for depositing the tread band 6 in a radially outer position with respect to the belt structure 5, so as to form the crown structure of the tyre.

In accordance with the present invention, the deposition of the reinforced continuous elongated element 10 on the forming support 200 to form the coiled winding 11 that defines the zero-degrees reinforcing layer 8 takes place by applying to the reinforced continuous elongated element 10 a tension force that is initially predetermined and of an adjustable extent. For this purpose, the apparatus 100 comprises an adjustment device 300 that acts on the deposition device 110 to adjust said tension force during the deposition of the reinforced continuous elongated elements 10.

The adjustment device 300 comprises, in particular, a detection unit 301 of the current tension value acting on the reinforced continuous elongated element 10 during its deposition on the forming support 200 and an adjustment unit 302 of the tension force as a function of said current tension value, so that the detected current tension value is always below a predetermined threshold value.

The detection of the current tension value can take place continuously or with a predetermined frequency. Preferably, the adjustment unit 302 keeps the tension force on minimum values, preferably lower than about 5 N, so as to keep the current tension value which the reinforced continuous elongated element 10 is subjected to during the deposition on the forming support 200 on values as close as possible to zero.

The provision of the adjustment device 300 described above allows a control to be carried out, during the building of the belt structure 5 (or of the crown structure), intended to avoid the presence of structural defects inside the belt structure 5. In particular, at the end of the manufacturing process of the belt structure 5 (or of the crown structure), when the forming support 200 is radially contracted to allow the removal of the belt structure 5 (or of the crown structure) which has been built thereon, the overall radial contraction force acting on the zero-degrees reinforcing structure 8 (given by the sum of the tension force active on the reinforced continuous elongated element 10 during the winding on the forming support 200 and of the magnetic attraction force exerted by the magnetic sheets 250 and 251 of the forming support 200) is prevented from being of an extent greater than the mutual coupling force that keeps the zero-degrees reinforcing structure 8 and the radially innermost belt layer 5a joined together. Otherwise, there would be an undesired structural detachment between zero-degrees reinforcing structure 8 and radially innermost belt layer 5a, with consequent discarding of the tyre being processed.

A preferred embodiment of a process for producing tyres for vehicle wheels which can be carried out through the apparatus 100 described above will be now described.

At first, the forming support 200 is brought into its expanded operative configuration, illustrated in figures 1, 2 and 5, and it is rotated about its axis X-X- until the sector 210' provided with the magnetic sheets 250 is brought close to the magnetic rolls 116.

With reference to figures 1 and 2, at this point the deposition device 110, through the feeding members 112, starts to feed the reinforced continuous elongated elements 10 towards the forming support 200, until the head portion 10a of each reinforced continuous elongated element 10 reaches the respective magnetic roll 116.

At this point the actuators 114 are actuated so as to bring the rolls 116 closer to the forming support 200, until the head portion 10a of each reinforced continuous elongated element 10 is brought into contact with a respective magnetic sheet 250. Due to the attraction force exerted by the magnetic sheets 250 on the metallic cords of the reinforced continuous elongated element 10, which at the sizing stage is selected to be greater than that exerted by the rolls 116, the head portion 10a of each reinforced continuous elongated element 10 is thus transferred onto the forming support 200, remaining firmly anchored thereto by magnetic attraction.

The forming support 200 at this point is driven in rotation. Due to this rotation a pulling action is exerted on each reinforced continuous elongated element. Thus the winding of the reinforced continuous elongated elements 10 on the forming support 200 begins.

Once each coil of the winding is completed, the arms 113 are moved, synchronised with each other and with the rotation movement of the forming support 200, towards or away from one another, so as to form a respective coiled winding 11 on each side of the forming support 200 with respect to the middle plane M.

In accordance with the above description, during the winding on the forming support 200 each reinforced continuous elongated element 10 is subjected to a initially preset tension force and the current tension value which the reinforced continuous elongated element 10 is subjected to is detected. The tension force is adjusted and the current tension value is detected, periodically or continuously, so that the current tension value detected each time is lower than a predetermined threshold value.

When it is wished to end the winding of each reinforced continuous elongated element 10, the cutting member described above is actuated and the tail portion 10b of the length of reinforced continuous elongated element 10 thus sheared is also made to stick by magnetic attraction on the respective magnetic sheet 250, preferably providing the circumferential overlap described above and shown in figure 8. The building of the two opposite zero-degrees reinforcing layers 8 on the forming support 200 is thus completed.

Thereafter, the device 150 starts to deposit a first belt layer 5a on the coiled windings 11 previously deposited on the forming support 200. Following such deposition, the radially innermost belt layer 5a is associated with the coiled windings 11 due to the mutual attraction force generated by the stickiness of the respective elastomeric materials.

Then the sequential deposition of the other radially overlapped belt layers 5a is carried out, each belt layer 5a being associated with the radially innermost belt layer 5a in this case too due to a mutual attraction force generated by the stickiness of the respective elastomeric materials. In this way the building of the belt structure 5 on the forming support 200 is completed.

At this point, through the rolls 121 controlled by the actuators 123, a rolling action (possibly repeated many times forward and backward) is carried out on the radially outermost belt layer 5a. Such rolling action is carried out at least at the magnetic sheets 250 and, therefore, at the head and tail portions 10a, 10b of the reinforced continuous elongated elements 10, so as to consolidate the mutual coupling between each coiled winding 11 and radially overlapped belt layers 5a.

In some embodiments of the present invention, the deposition of the tread band 8 in a radially outer position with respect to the belt structure 5 just formed is carried out.

Thereafter, the forming support 200 is brought into its contracted radial configuration (shown in figure 4) and the belt structure 5 (possibly with the tread band 6) is removed (by a slipping off action) from the forming support 200. Due to the control action on the tension force and of the particular sizing of the magnetic sheets 250 (and of the magnetic sheets 251), when the forming support 200 is radially contracted the zero-degrees reinforcing layer 8 is subjected to an overall radial contraction force (given by the sum of the tension force and of the magnetic attraction force exerted by the magnetic sheets 250 and 251) of a smaller extent than the mutual coupling force active between each coiled winding 11 and the radially overlapped belt layer 5a. Consequently, the radially innermost belt layer 5a remains firmly anchored to the respective coiled winding 11, ensuring the quality of the green tyre thus produced.

The present invention has been described only with reference to some preferred embodiments. Various changes can be made to the embodiments described above, whilst still remaining within the scope of protection of the invention defined by the following claims.

In particular, the apparatus 100 and the process described above are particularly suitable for making tyres of the type indicated in figure 9. In view of the above description, the man skilled in the art will understand which modifications need to be made to the apparatus and to the process of the present invention in order to make tyres of the type indicated in figure 10, such modifications in any case being covered by the scope of protection of the invention defined by the following claims. For example, the deposition device 110 can in this case comprise a single feeding member 112 and said pressing member 120 can comprise a single roller 121. Moreover, the sectors 210', 210" can possibly comprise a single magnetic sheet 250, 251 extending axially substantially for the entire axial extension of the belt structure 5. Accordingly, the sectors 210, 210', 210" can in this case have a single knurled portion that extends axially coherently with the axial extension of the magnetic sheet 250, 251.

## Claims

1. Method for controlling the building of a reinforcing structure of tyres for vehicle wheels, comprising:
- exerting, on at least one head portion (10a) of at least one reinforced continuous elongated element (10) of elastomeric material, an attraction force towards a forming support (200);
- depositing said at least one reinforced continuous elongated element (10) of elastomeric material on said forming support (200) with a predetermined tension force to form a coiled winding (11);
- depositing at least one reinforcing layer (5a) in a radially outer position with respect to said coiled winding (11) to form a reinforcing structure (5) comprising said coiled winding (11) and said at least one reinforcing layer (5a), wherein between said coiled winding (11) and said at least one reinforcing layer (5a) a mutual coupling force acts;
- separating said reinforcing structure (5) from said forming support (200) through radial contraction of said forming support (200);
wherein at least one of said attraction force and said tension force is controlled so that the sum of said attraction force and said tension force is lower than said coupling force.

2. Method according to claim 1, wherein said control is carried out on said tension force.

3. Method according to claim 2, comprising detecting a current tension value acting on said at least one reinforced continuous elongated element (10) of elastomeric material during its deposition and adjusting said tension force so that said current tension value is lower than a predetermined threshold value.

4. Method according to any one of the previous claims, comprising, before depositing said at least one reinforcing layer (5a), exerting said attraction force on at least one tail portion (10b) of said at least one reinforced continuous elongated element (10) of elastomeric material.

5. Method according to any one of the previous claims, wherein said at least one reinforced continuous elongated element (10) of elastomeric material comprises at least one metallic cord and said attraction force is a magnetic force.

6. Method according to claim 5, wherein said magnetic force is generated by at least one first magnetic sheet (250) associated with said forming support (200) at a radially outer surface portion thereof.

7. Method according to claim 5 or 6, wherein said magnetic force is generated by a plurality of second magnetic sheets (251) associated with said forming support (200).

8. Method according to claim 6 or 7, comprising pressing said at least one reinforcing layer (5a) on said coiled winding (11) at least at said at least one first magnetic sheet (250).

9. Process for producing tyres for vehicle wheels, comprising building a reinforcing structure (5) on a forming support (200), wherein building said reinforcing structure (5) comprises:
- feeding at least one reinforced continuous elongated element (10) of elastomeric material close to said forming support (200);
- exerting on a head portion (10a) of said at least one reinforced continuous elongated element (10) of elastomeric material an attraction force towards said forming support (200) ;
- winding said at least one reinforced continuous elongated element (10) of elastomeric material on said forming support (200) with a predetermined tension force to form a coiled winding (11);
- depositing at least one reinforcing layer (5a) in a radially outer position with respect to said coiled winding (11) to form a reinforcing structure (5) comprising said coiled winding (11) and said at least one reinforcing layer (5a), wherein between said coiled winding (11) and said at least one reinforcing layer (5a) a mutual coupling force acts;
- separating said reinforcing structure (5) from said forming support (200) through radial contraction of said forming support (200);
wherein at least one of said attraction force and said tension force is controlled so that the sum of said attraction force and said tension force is lower than said coupling force.

10. Apparatus (100) for producing a tyre for vehicle wheels, comprising a building station (101) of a reinforcing structure (5), said building station (101) comprising:
- a radially expandable/contractable forming support (200) comprising, at at least one radially outer surface portion thereof, at least one attachment area on which an attraction force acts;
- a deposition device (110) of at least one reinforced continuous elongated element (10) of elastomeric material on said forming support (200) with a predetermined tension force to form a coiled winding (11);
- a deposition device (150) of at least one reinforcing layer (5a) in a radially outer position with respect to said coiled winding (11) to form a reinforcing structure (5) comprising said coiled winding (11) and said at least one reinforcing layer (5a), wherein between said coiled winding (11) and said at least one reinforcing layer (5a) a mutual coupling force acts;
- an adjustment device (300) active on at least one of said at least one attachment area and said deposition device (110) of said at least one reinforced continuous elongated element (10) of elastomeric material so that the sum of said attraction force and said tension force is lower than said coupling force.

11. Apparatus (100) according to claim 10, wherein said adjustment device (300) acts on said deposition device (110) of said at least one reinforced continuous elongated element (10) of elastomeric material to adjust said tension force.

12. Apparatus (100) according to claim 11, wherein said adjustment device (300) comprises a detection unit (301) of a current tension value acting on said at least one reinforced continuous elongated element (10) of elastomeric material during its deposition.

13. Apparatus (100) according to claim 12, wherein said adjustment device (300) comprises an adjustment unit (302) of said tension force as a function of said current tension value.

14. Apparatus (100) according to any one of claims 11 to 13, comprising at least one first magnetic sheet (250) associated with said at least one attachment area.

15. Apparatus (100) according to any one of claims 10 to 14, comprising a plurality of second magnetic sheets (251) associated with said forming support (200).

## Patentansprüche

1. Verfahren zur Steuerung der Fertigung von Verstärkungsstrukturen von Reifen für Fahrzeugräder, wobei das Verfahren umfasst:
- Ausüben einer Anziehungskraft auf einen Formungsträger (200) an zumindest einem Kopfabschnitt (10a) zumindest eines verstärkten durchgehenden länglichen Elements (10) aus Elastomermaterial;
- Ablegen des zumindest einen verstärkten durchgehenden länglichen Elements (10) aus Elastomermaterial an dem Formungsträger (200) mit einer vorbestimmten Spannkraft, um eine gewundene Wicklung (11) zu bilden;
- Ablegen zumindest einer Verstärkungsschicht (5a) in einer radial äußeren Position in Bezug auf die gewundene Wicklung (11), um eine Verstärkungsstruktur (5) zu bilden, die die gewundene Wicklung (11) und die zumindest eine Verstärkungsschicht (5a) umfasst, wobei zwischen der gewundenen Wicklung (11) und der zumindest einen Verstärkungsschicht (5a) eine wechselseitige Kopplungskraft wirkt;
- Trennen der Verstärkungsstruktur (5) von dem Formungsträger (200) durch radiales Kontrahieren des Formungsträgers (200);
wobei zumindest die Anziehungskraft und/oder die Spannkraft so gesteuert wird, dass die Summe der Anziehungskraft und der Spannkraft geringer ist als die Kopplungskraft.

2. Verfahren nach Anspruch 1, wobei die Steuerung über die Spannkraft ausgeführt wird.

3. Verfahren nach Anspruch 2, umfassend das Erfassen eines aktuellen Spannungswerts, der auf das zumindest eine verstärkte durchgehende längliche Element (10) aus Elastomermaterial während dessen Ablegen wirkt, und Einstellen der Spannkraft, so dass der aktuelle Spannungswert niedriger ist als ein vorbestimmter Schwellenwert.

4. Verfahren nach einem der vorhergehenden Ansprüche, umfassend, vor dem Ablegen der zumindest einen Verstärkungsschicht (5a), das Ausüben der Anziehungskraft auf zumindest einen nachlaufenden Abschnitt (10b) des zumindest einen verstärkten durchgehenden länglichen Elements (10) aus Elastomermaterial.

5. Verfahren nach einem der vorhergehenden Ansprüche, wobei das zumindest eine verstärkte durchgehende längliche Element (10) aus Elastomermaterial zumindest einen Metalldraht umfasst, und die Anziehungskraft eine Magnetkraft ist.

6. Verfahren nach Anspruch 5, wobei die Magnetkraft durch zumindest eine magnetische Platte (250) erzeugt wird, die dem Formungsträger (200) an einem radial äußeren Oberflächenabschnitt davon zugeordnet ist.

7. Verfahren nach Anspruch 5 oder 6, wobei die Magnetkraft durch eine Vielzahl von zweiten magnetischen Platten (251) erzeugt wird, die dem Formungsträger (200) zugeordnet sind.

8. Verfahren nach Anspruch 6 oder 7, umfassend das Pressen der zumindest einen Verstärkungsschicht (5a) auf die gewundene Wicklung (11) zumindest an der zumindest einen ersten magnetischen Platte (250).

9. Verfahren zur Herstellung von Reifen für Fahrzeugräder, umfassend das Fertigen einer Verstärkungsstruktur (5) an einem Formungsträger (200), wobei das Fertigen der Verstärkungsstruktur (5) die folgenden Schritte umfasst:
- Zuführen zumindest eines verstärkten durchgehenden länglichen Elements (10) aus Elastomermaterial nahe an den Formungsträger (200);
- Ausüben einer Anziehungskraft zu dem Formungsträger (200) hin an einem Kopfabschnitt (10a) des zumindest einen verstärkten durchgehenden länglichen Elements (10) aus Elastomermaterial;
- Wickeln des zumindest einen verstärkten durchgehenden länglichen Elements (10) aus Elastomermaterial auf den Formungsträger (200) mit einer vorbestimmten Spannkraft, um eine gewundene Wicklung (11) zu bilden;
- Ablegen zumindest einer Verstärkungsschicht (5a) in einer radial äußeren Position in Bezug auf die gewundene Wicklung (11), um eine Verstärkungsstruktur (5) zu bilden, die die gewundene Wicklung (11) und die zumindest eine Verstärkungsschicht (5a) umfasst, wobei zwischen der gewundenen Wicklung (11) und der zumindest einen Verstärkungsschicht (5a) eine wechselseitige Kopplungskraft wirkt;
- Trennen der Verstärkungsstruktur (5) von dem Formungsträger (200) durch radiales Kontrahieren des Formungsträgers (200);
wobei zumindest die Anziehungskraft und/oder die Spannkraft so gesteuert wird, dass die Summe der Anziehungskraft und der Spannkraft geringer ist als die Kopplungskraft.

10. Vorrichtung (100) zur Herstellung von Reifen für Fahrzeugräder, wobei die Vorrichtung eine Fertigungsstation (101) für eine Verstärkungsstruktur (5) umfasst, wobei die Fertigungsstation (101) umfasst:
- einen radial ausdehnbaren/kontrahierbaren Formungsträger (200) umfassend zumindest einen Anbringungsbereich, auf den die Anziehungskraft wirkt, an zumindest einem radial äußeren Oberflächenabschnitt davon;
- eine Ablegevorrichtung (110) für das zumindest eine verstärkte durchgehende längliche Element (10) aus Elastomermaterial an dem Formungsträger (200) mit einer vorbestimmten Spannkraft, um eine gewundene Wicklung (11) zu bilden;
- eine Ablegevorrichtung (150) für die zumindest eine Verstärkungsschicht (5a) in einer radial äußeren Position in Bezug auf die gewundene Wicklung (11), um eine Verstärkungsstruktur (5) umfassend die gewundene Wicklung (11) und die zumindest eine Verstärkungsschicht (5a) zu bilden, wobei zwischen der gewundenen Wicklung (11) und der zumindest einen Verstärkungsschicht (5a) eine wechselseitige Kopplungskraft wirkt;
- eine Einstellvorrichtung (300), die auf zumindest den zumindest einen Anbringungsbereich und/oder die Ablegevorrichtung (110) für das zumindest eine verstärkte durchgehende längliche Elements (10) aus Elastomermaterial wirkt, so dass die Summe der Anziehungskraft und der Spannkraft geringer ist als die Kopplungskraft.

11. Vorrichtung (100) nach Anspruch 10, wobei die Einstellvorrichtung (300) auf die Ablegevorrichtung (110) des zumindest einen verstärkten durchgehenden länglichen Elements (10) aus Elastomermaterial wirkt, um die Spannkraft einzustellen.

12. Vorrichtung (100) nach Anspruch 11, wobei die Einstellvorrichtung (300) eine Erfassungseinheit (301) für einen aktuellen Spannungswert an dem zumindest einen verstärkten durchgehenden länglichen Element (10) aus Elastomermaterial während dessen Ablage umfasst.

13. Vorrichtung (100) nach Anspruch 12, wobei die Einstellvorrichtung (300) eine Einstelleinheit (302) der Spannkraft als eine Funktion des aktuellen Spannungswerts umfasst.

14. Vorrichtung (100) nach einem der Ansprüche 11 bis 13, umfassend zumindest eine erste magnetische Platte (250), die dem zumindest einen Anbringungsbereich zugeordnet ist.

15. Vorrichtung (100) nach einem der Ansprüche 10 bis 14, umfassend eine Vielzahl von zweiten magnetischen Platten (251), die dem Formungsträger (200) zugeordnet sind.

## Revendications

1. Procédé de commande de la construction d'une structure de renfort de pneus pour roues de véhicule, comprenant le fait :
- d'exercer, sur au moins une partie de tête (10a) d'au moins un élément allongé continu renforcé (10) en matériau élastomère, une force d'attraction vers un support de formage (200) ;
- de déposer ledit au moins un élément allongé continu renforcé (10) en matériau élastomère sur ledit support de formage (200) avec une force de tension prédéterminée pour former un enroulement de bobine (11) ;
- de déposer au moins une couche de renfort (5a) dans une position radialement extérieure par rapport audit enroulement de bobine (11) pour former une structure de renfort (5) comprenant ledit enroulement de bobine (11) et ladite au moins une couche de renfort (5a), où, entre ledit enroulement de bobine (11) et ladite au moins une couche de renfort (5a), une force de couplage mutuel agit ;
- de séparer ladite structure de renfort (5) dudit support de formage (200) par contraction radiale dudit support de formage (200) ;
dans lequel au moins l'une de ladite force d'attraction et de ladite force de tension est commandée de sorte que la somme de ladite force d'attraction et de ladite force de tension soit inférieure à ladite force de couplage.

2. Procédé selon la revendication 1, dans lequel ladite commande est effectuée sur ladite force de tension.

3. Procédé selon la revendication 2, comprenant le fait de détecter une valeur de tension actuelle agissant sur ledit au moins un élément allongé continu renforcé (10) en matériau élastomère au cours de son dépôt et de régler ladite force de tension de sorte que ladite valeur de tension actuelle soit inférieure à une valeur seuil prédéterminée.

4. Procédé selon l'une quelconque des revendications précédentes, comprenant, avant le dépôt de ladite au moins une couche de renfort (5a), le fait d'exercer ladite force d'attraction sur au moins une partie de queue (10b) dudit au moins un élément allongé continu renforcé (10) en matériau élastomère.

5. Procédé selon l'une quelconque des revendications précédentes, dans lequel ledit au moins un élément allongé continu renforcé (10) en matériau élastomère comprend au moins un câble métallique et ladite force d'attraction est une force magnétique.

6. Procédé selon la revendication 5, dans lequel ladite force magnétique est générée par au moins une première feuille magnétique (250) associée audit support de formage (200) au niveau d'une partie de surface radialement extérieure de celui-ci.

7. Procédé selon la revendication 5 ou 6, dans lequel ladite force magnétique est générée par une pluralité de deuxièmes feuilles magnétiques (251) associées audit support de formage (200).

8. Procédé selon la revendication 6 ou 7, comprenant le fait de presser ladite au moins une couche de renfort (5a) sur ledit enroulement de bobine (11) au moins au niveau de ladite au moins une première feuille magnétique (250).

9. Processus de fabrication de pneus pour roues de véhicule, comprenant la construction d'une structure de renfort (5) sur un support de formage (200), où la construction de ladite structure de renfort (5) comprend le fait :
- d'introduire au moins un élément allongé continu renforcé (10) en matériau élastomère à proximité dudit support de formage (200) ;
- d'exercer, sur une partie de tête (10a) dudit au moins un élément allongé continu renforcé (10) en matériau élastomère, une force d'attraction vers ledit support de formage (200) ;
- d'enrouler ledit au moins un élément allongé continu renforcé (10) en matériau élastomère sur ledit support de formage (200) avec une force de tension prédéterminée pour former un enroulement de bobine (11) ;
- de déposer au moins une couche de renfort (5a) dans une position radialement extérieure par rapport audit enroulement de bobine (11) pour former une structure de renfort (5) comprenant ledit enroulement de bobine (11) et ladite au moins une couche de renfort (5a), où, entre ledit enroulement de bobine (11) et ladite au moins une couche de renfort (5a), une force de couplage mutuel agit ;
- de séparer ladite structure de renfort (5) dudit support de formage (200) par contraction radiale dudit support de formage (200) ;
dans lequel au moins l'une de ladite force d'attraction et de ladite force de tension est commandée de sorte que la somme de ladite force d'attraction et de ladite force de tension soit inférieure à ladite force de couplage.

10. Appareil (100) pour fabriquer un pneu pour roues de véhicule, comprenant un poste de construction (101) d'une structure de renfort (5), ledit poste de construction (101) comprenant :
- un support de formage radialement extensible/rétractable (200) comprenant, au niveau d'au moins une partie de surface radialement extérieure de celui-ci, au moins une zone de fixation sur laquelle une force d'attraction agit ;
- un dispositif de dépôt (110) d'au moins un élément allongé continu renforcé (10) en matériau élastomère sur ledit support de formage (200) avec une force de tension prédéterminée pour former un enroulement de bobine (11) ;
- un dispositif de dépôt (150) d'au moins une couche de renfort (5a) dans une position radialement extérieure par rapport audit enroulement de bobine (11) pour former une structure de renfort (5) comprenant ledit enroulement de bobine (11) et ledit au moins un couche de renfort (5a), où, entre ledit enroulement de bobine (11) et ladite au moins une couche de renfort (5a), une force de couplage mutuel agit ;
- un dispositif de réglage (300) actif sur au moins l'un(e) de ladite au moins une zone de fixation et dudit dispositif de dépôt (110) dudit au moins un élément allongé continu renforcé (10) en matériau élastomère de sorte que la somme de ladite force d'attraction et de ladite force de tension soit inférieure à ladite force de couplage.

11. Appareil (100) selon la revendication 10, dans lequel ledit dispositif de réglage (300) agit sur ledit dispositif de dépôt (110) dudit au moins un élément allongé continu renforcé (10) en matériau élastomère pour régler ladite force de tension.

12. Appareil (100) selon la revendication 11, dans lequel ledit dispositif de réglage (300) comprend une unité de détection (301) d'une valeur de tension actuelle agissant sur ledit au moins un élément allongé continu renforcé (10) en matériau élastomère au cours de son dépôt.

13. Appareil (100) selon la revendication 12, dans lequel ledit dispositif de réglage (300) comprend une unité de réglage (302) de ladite force de tension en fonction de ladite valeur de tension actuelle.

14. Appareil (100) selon l'une quelconque des revendications 11 à 13, comprenant au moins une première feuille magnétique (250) associée à ladite au moins une zone de fixation.

15. Appareil (100) selon l'une quelconque des revendications 10 à 14, comprenant une pluralité de deuxièmes feuilles magnétiques (251) associées audit support de formage (200).
